(19) Europäisches Patentamt
European Patent Office
Office européen des brevets

(11) **EP 3 490 751 B1**

(12) **EUROPÄISCHE PATENTSCHRIFT**

(45) Veröffentlichungstag und Bekanntmachung des Hinweises auf die Patenterteilung:
**30.09.2020 Patentblatt 2020/40**

(21) Anmeldenummer: **17752013.7**

(22) Anmeldetag: **18.07.2017**

(51) Int Cl.:
**B23Q 1/00** (2006.01)       **B23Q 1/52** (2006.01)
**B23Q 7/02** (2006.01)       **B23Q 39/00** (2006.01)
**B23Q 39/04** (2006.01)       **B65G 29/00** (2006.01)
**B65G 47/80** (2006.01)       **B65G 47/84** (2006.01)

(86) Internationale Anmeldenummer:
**PCT/EP2017/068157**

(87) Internationale Veröffentlichungsnummer:
**WO 2018/019668 (01.02.2018 Gazette 2018/05)**

(54) **DREHDURCHFÜHRUNG FÜR EINE TRANSPORTEINRICHTUNG UND TRANSPORTEINRICHTUNG MIT EINER DREHDURCHFÜHRUNG**

ROTARY UNION FOR A CONVEYOR SYSTEM AND CONVEYOR SYSTEM WITH A ROTARY UNION

PASSAGE TOURNANT POUR UN DISPOSITIF TRANSPORTEUR ET DISPOSITIF TRANSPORTEUR ÉQUIPÉ D'UN PASSAGE TOURNANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2016 DE 102016008948**

(43) Veröffentlichungstag der Anmeldung:
**05.06.2019 Patentblatt 2019/23**

(73) Patentinhaber: **Fresenius Medical Care Deutschland GmbH**
**61352 Bad Homburg v.d.H (DE)**

(72) Erfinder: **HEPPE, John**
**66606 St. Wendel (DE)**

(74) Vertreter: **Oppermann, Frank**
**OANDO Oppermann & Oppermann LLP**
**Wilhelminenstrasse 1a**
**65193 Wiesbaden (DE)**

(56) Entgegenhaltungen:
**EP-A1- 0 570 734     EP-A1- 0 802 016**
**EP-A2- 0 901 877     DE-A1- 10 343 378**
**SU-A1- 1 000 216**

**Beschreibung**

Die Erfindung betrifft eine Drehdurchführung für eine Transporteinrichtung mit einem drehbaren Objektträger, der umfangsmäßig verteilt angeordnete Objekt-Trägerelemente aufweist, auf denen Objekte angeordnet werden, die auf einer kreisförmigen Bewegungsbahn von Arbeitsstation zu Arbeitsstation einer Produktionsanlage transportiert werden. Darüber hinaus betrifft die Erfindung eine Transporteinrichtung mit einer derartigen Drehdurchführung und eine Produktionsanlage zur Herstellung von Produkten, insbesondere von mit einem medizinischen Produkt befüllten Behältnissen mit einer derartigen Transporteinrichtung.

In Produktionsanlagen zur Herstellung von Produkten finden zum Transport der Produkte von Arbeitsstation zu Arbeitsstation Drehtische Verwendung, die auch als Rundtische oder Rundschalttische bezeichnet werden. Die bekannten Rundschalttische weisen einen kreisrunden Objektträger auf, der um eine vertikale Achse drehbar ist. Der Objektträger wird von einer Antriebseinheit angetrieben. Der Objektträger dreht sich während der Produktion in einzelnen Arbeitstakten schrittweise im oder entgegen dem Uhrzeigersinn.

Die Arbeitsstationen sind um den Objektträger umfangsmäßig verteilt angeordnet. Die zu bearbeitenden Objekte befinden sich umfangsmäßig verteilt auf dem Objektträger. Durch Drehen des Objektträgers können die Objekte von Arbeitsstation zu Arbeitsstation transportiert werden. Die Arbeitsstationen führen an den Objekten jeweils einen Arbeitsprozess aus, der einen oder mehrere Produktionsschritte umfassen kann. Die Objekte können auf dem Objektträger in Objekt-Trägerelementen angeordnet sein, die ein oder mehrere Objekte aufnehmen. Die Objekte können herzustellende Produkte (Waren) oder zu bearbeitende Werkstücke oder Prüfgegenstände sein.

Die bekannten Rundschalttische verfügen über Objektträger, auf denen die Objekt-Trägerelemente relativ zueinander unbeweglich angeordnet sind. Sie sind in vorgegebenen Abständen umfangsmäßig verteilt auf dem Objektträger befestigt. In Verbindung mit den ortsfesten Arbeitsstationen werden die Objekt-Trägerelemente allein durch die Drehung des Objektträgers in die entsprechende Position gegenüber der jeweiligen Arbeitsstation gebracht. Dort verharren die Objekt-Trägerelemente zwangsläufig solange, bis die Arbeitsstation den Arbeitsprozess durchgeführt hat.

Eine Produktionsanlage verfügt im Allgemeinen über Arbeitsstationen mit unterschiedlichen Prozesszeiten. Dabei wird die schrittweise Drehung des Objektträgers im Wesentlichen durch die Dauer des längsten Prozesses bestimmt. Aufgrund des Stillstandes des Objektträgers während eines Arbeitsprozesses mit einer langen Prozesszeit, der vorgegebenen Abständen der Objekt-Trägerelemente und der schrittweisen Drehung des Objektträgers um einen vorgegebenen Drehwinkel ist auch für die Arbeitsprozesse mit kurzen Prozesszeiten zur Bearbeitung jedes Objektes jeweils eine eigene Arbeitsstation erforderlich. Diese Arbeitsstationen kommen allerdings nur kurz zum Einsatz. Dies ist mit hohen Investitionen und Betriebskosten verbunden und wenig effizient. Zudem steigt mit der Anzahl der Arbeitsstationen die Ausfallwahrscheinlichkeit der Produktionsanlage. Solche Produktionsanlagen zeichnen sich durch eine hohe Komplexität und eine fehlende Zugänglichkeit der Komponenten aus.

Wenn das Produktionsverfahren Arbeitsprozesse mit unterschiedlichen Prozesszeiten umfasst, ist aus den oben genannten Gründen der Einsatz einer Transporteinrichtung von Vorteil, bei dem der Objektträger und die Objekt-Trägerelemente keine starre Anordnung darstellen, so dass einige Objekt-Trägerelemente an Arbeitsstationen mit einer langen Prozesszeit verbleiben können, während andere Objekt-Trägerelemente von Arbeitsstation zu Arbeitsstation transportiert werden können. Weiterhin ist von Vorteil, wenn auf die Objekte nicht nur an den Arbeitsstationen, sondern auch an den Objekt-Trägerelementen vorgesehene Einrichtungen einwirken können. Diese Einrichtungen setzen aber eine Versorgung mit Medien voraus. Pneumatische Betätigungsorgane setzen beispielsweise eine Versorgung mit Druckluft voraus.

Für die Überführung von Medien, beispielsweise Flüssigkeiten oder Gasen, sind Drehdurchführungen bekannt, die über ein feststehendes Bauteil und ein drehbares Bauteil verfügen. Das feststehende Bauteil weist einen Medien-Eingang und das drehbare Bauteil einen Medien-Ausgang auf. In dem feststehenden Bauteil ist ein axialer Kanal ausgebildet, der zu einer radialen Bohrung führt, die gegenüber einem Ringspalt abgedichtet ist, der in dem drehbaren Bauteil ausgebildet ist. Die Abdichtung an den Dichtflächen von dem feststehenden und dem drehbaren Bauteil erfolgt mit den bekannten Gleit- oder Rotationdichtungen. Um mehrere Fluide überführen zu können, sind auch mehrkanalige Drehdurchführungen bekannt, bei denen in dem feststehenden Bauteil mehrere axiale Kanäle ausgebildet sind, die jeweils eine radiale Bohrung haben, wobei in dem drehbaren Bauteil mehrerer Ringspalte ausgebildet sind. Die mehrkanaligen Drehdurchführungen zeichnen sich aber nur durch ein einziges drehbares Bauteil aus.

Die EP 0 570 734 A1 beschreibt eine gattungsgemässe Drehdurchführung für Maschinenteile, die auch für eine Transporteinrichtung mit einem drehbaren Objektträger, der umfangsmäßig verteilt angeordnete Objekt-Trägerelemente aufweist, von denen mindestens ein Objektträger-Element auf dem Objektträger auf einer Kreisbahn relativ zum Objektträger verschiebbar angeordnet ist oder an dem Objektträger arretierbar ist, geeignet wäre. Die Drehdurchführung verfügt über ein feststehendes Bauteil mit mehreren Medien-Eingängen zum Zuführen mehrerer Medien und ein gegenüber dem feststehenden Bauteil drehbares Bauteil mit mehreren Medien-Ausgängen, wobei eine Flüssigkeitsverbindung zwischen den Medien-Eingängen und -ausgängen hergestellt werden kann.

Die DE 103 43 378 A1 beschreibt eine Vorrichtung zum Bearbeiten von Werkstücken an mehreren Arbeitsstationen mit mehreren Werkstückträgern, an denen jeweils Werkstücke angebracht werden können. Die Vorrichtung verfügt über eine Transporteinheit, mit der die Werkstückträger von einer Arbeitsstation zur nächsten Arbeitsstation transportiert werden können, und eine Antriebseinheit, mit der die Transporteinheit von einer Ruheposition zu einer nächsten Ruheposition verfahren werden kann, wobei die Transporteinheit mit der Antriebseinheit entlang einer Bahn bewegt werden kann.

Der Erfindung liegt die Aufgabe zugrunde, ein Produktionsverfahren, bei dem Objekte von Arbeitsstation zu Arbeitsstation einer Produktionsanlage transportiert werden, zu verbessern. Insbesondere liegt der Erfindung die Aufgabe zugrunde, eine Drehdurchführung für eine Transporteinrichtung mit einem drehbaren Objektträger bereitzustellen, die eine flexible Gestaltung des Produktionsprozesses erlaubt. Eine weitere Aufgabe der Erfindung ist eine Transporteinrichtung und eine Produktionsanlage zur Herstellung von Produkten zu schaffen, die einen relativ einfachen Aufbau hat und eine flexible Gestaltung des Produktionsprozesses erlaubt.

Die Lösung dieser Aufgaben erfolgt erfindungsgemäß mit den Merkmalen des unabhängigen Patentanspruchs. Die abhängigen Ansprüche betreffen vorteilhafte Ausführungsformen der Erfindung.

Die erfindungsgemäße Drehdurchführung, die ein feststehendes Bauteil mit einem oder mehreren Medien-Eingängen zum Zuführen eines oder mehrerer Medien zur Versorgung einer oder mehrerer Aktor-Einheiten eines Objekt-Trägerelements aufweist, ist für eine Transporteinrichtung mit einem drehbaren Objektträger bestimmt, der umfangsmäßig verteilt angeordnete Objekt-Trägerelemente aufweist, von denen mindestens ein Objektträger-Element auf dem Objektträger auf einer Kreisbahn relativ zum Objektträger verschiebbar angeordnet ist oder an dem Objektträger arretierbar ist.

Die erfindungsgemäße Drehdurchführung unterscheidet sich von den bekannten Drehdurchführungen dadurch, dass mehrere gegenüber dem feststehenden Bauteil unabhängig voneinander um eine gemeinsame Mittelachse drehbare Bauteile vorgesehen sind, die jeweils einen oder mehrere Medien-Ausgänge aufweisen. Das feststehende Bauteil und die drehbaren Bauteile sind derart ausgebildet, dass eine Medienverbindung zwischen einem Medien-Eingang des feststehenden Bauteils und einem Medien-Ausgang eines drehbaren Bauteils oder mehreren Medien-Eingängen des feststehenden Bauteils und mehreren Medien-Ausgängen der drehbaren Bauteile hergestellt wird. Die Drehdurchführung erlaubt also die Herstellung einer Medienverbindung zwischen Objektträger-Elementen zugeordneten Aktor-Einheiten, die auf einer kreisförmigen Bewegungsbahn auf einem Objektträger bewegt werden können oder auf dem Objektträger an einem festen Ort verbleiben können, und einer ortsfesten, zentralen Versorgungseinrichtung, d. h. unabhängig von der Bewegung der Objekt-Trägerelemente. Dadurch kann der Aufbau der Transporteinrichtung sowie der gesamten Produktionsanlage vereinfacht werden. Das Produktionsverfahren kann mit den Objektträger-Elementen zugeordneten Betätigungsorganen (Aktoren) flexibel gestaltet werden. Darüber hinaus vereinfacht sich die Programmierung der Produktionsanlage, da die Aktoren dem Objektträger-Element zugeordnet sind und nicht von außen eingreifen müssen.

In diesem Zusammenhang werden unter Medien sowohl gasförmige Medien, beispielsweise Druckluft, als auch flüssige Medien, beispielsweise medizinische Flüssigkeiten, verstanden. Unter einer Versorgung mit einem Medium wird auch eine Stromversorgung verstanden. Für eine Stromversorgung sind die Versorgungsleitungen Stromleitungen, wobei an dem Übergang von dem feststehenden Bauteil und dem drehbaren Bauteil Schleifkontakte vorgesehen sein können. Es kann zur Datenübertragung ein Bussystem, z.B. ein Feldbus, insbesondere mit dem Standard PROFIBUS (Process Field Bus) zum Einsatz kommen.

Unter Objekt-Trägerelementen werden sämtliche Elemente verstanden, auf denen ein oder mehrere Objekte abgelegt oder angeordnet werden können. Die Objekte können auf den Objekt-Trägerelementen lose liegen oder auf den Objekt-Trägerelementen fixiert sein.

Unter Aktor-Einheiten werden sämtliche Einheiten verstanden, mit denen auf ein Objekt, das einem Objekt-Trägerelement zugeordnet ist, eingewirkt werden kann oder mit denen Messwerte aufgenommen werden können, sowie sämtliche Einheiten, die der Betätigung von Bauteilen dienen, die für die Steuerung des Prozesses relevant sind. Die Aktor-Einheiten können auf unterschiedliche Art auf die Objekte einwirken, um einzelne Prozessschritte durchzuführen, oder unterschiedliche Messwerte aufnehmen. Beispielsweise können die Einwirkungen physikalisch und/oder chemisch sein. Die Aktor-Einheiten können beispielsweise auf die Objekte Kräfte ausüben.

Eine bevorzugte Ausführungsform der Drehdurchführung sieht vor, dass jedes drehbare Bauteil der Drehdurchführung ein Kopplungselement aufweist, das derart ausgebildet ist, dass das drehbare Bauteil an ein Objekt-Trägerelement koppelbar ist. Das Kopplungselement kann unterschiedlich ausgebildet sein. Allein entscheidend ist, dass das Objekt-Trägerelement, das relativ zum Objekt-Träger beweglich ist, das zugehörige drehbare Bauteil mitnimmt. Bei einer besonders vorteilhaften Ausführungsform ist das Kopplungselement eine Stange oder ein Gestänge.

In besonders vorteilhaften Ausführungsformen werden ausgehend von dem Medienausgang beziehungsweise den Medienausgängen des drehbaren Bauteils eine beziehungsweise mehrere Medienleitungen in dem Kopplungselement oder entlang der Kopplungselemente gehalten und/oder geführt, die ein beziehungsweise mehrere Medien zu dem Objekt-Trägerelement leiten.

Eine bevorzugte Ausführungsform der Drehdurchführung sieht vor, dass das feststehende Bauteil als ein zylindrischer Körper ausgebildet ist und die drehbaren Bauteile als das feststehende Bauteil umschließende Körper ausgebildet sind, wobei die drehbaren Bauteile um die Mittelachse des feststehenden Bauteils drehbar übereinander angeordnet sind. Dies führt zu einem kompakten Aufbau der Drehdurchführung.

Wenn die Aktor-Einheiten nur mit einem Medium versorgt werden, beispielsweise mit Druckluft, kann die erfindungsgemäße Drehdurchführung nur einen Medieneingang aufweisen, dem Druckluft zentral zugeführt wird. In dem feststehenden Bauteil können ein oder mehrere axiale Kanäle ausgebildet sein. Jeder axiale Kanal kann eine oder mehrere einem drehbaren Bauteil zugeordnete radiale Bohrungen haben. Jedes drehbare Bauteil kann einen oder mehrere Ringspalte aufweisen, die jeweils zur Übergabe des Mediums gegenüber einer radialen Bohrung abgedichtet sind.

Die drehbaren Bauteile können unterschiedliche Formen haben. Ein besonders kompakter Aufbau ergibt sich, wenn die drehbaren Bauteile als ringförmige Körper ausgebildet sind, die jeweils einen oder mehrerer radiale Medien-Ausgänge aufweisen können.

Die erfindungsgemäße Transporteinrichtung zum Transport von Objektes von Arbeitsstation zu Arbeitsstation verfügt über einen drehbaren Objektträger, der umfangsmäßig verteilt angeordnete Objekt-Trägerelemente aufweist, von denen mindestens ein Objekt-Trägerelemente auf dem Objektträger auf einer Kreisbahn relativ zum Objektträger verschiebbar angeordnet sind oder an dem Objektträger arretierbar ist, und die erfindungsgemäße Drehdurchführung.

Eine bevorzugte Ausführungsform der erfindungsgemäßen Transporteinrichtung sieht eine zentrale Medien-Versorgungsanlage vor, die über eine oder mehrere Versorgungsleitungen für die Zufuhr von einem oder mehreren Medien mit dem einen oder den mehreren Medien-Eingängen der Drehdurchführung verbunden ist.

Bei einer bevorzugten Ausführungsform ist die Drehdurchführung derart angeordnet, dass das feststehende Bauteil zentral auf dem Objektträger angeordnet ist oder den Objektträger im Zentrum durchdringt, wobei die drehbaren Bauteile auf gleicher Höhe oder tiefer oder höher in Bezug auf die Objekt-Trägerelemente angeordnet sein können. Die Objekt-Trägerelemente können daher um die drehbaren Bauteile umfangsmäßig verteilt angeordnet sein. Folglich kann das Medium den Betätigungsorganen von oben oder von unten oder von der Seite zugeführt werden.

Die Objekt-Trägerelemente können jeweils eine oder mehrere Aktor-Einheiten aufweisen, wobei die eine oder die mehreren Aktor-Einheiten für die Zuführung eines oder mehrerer Medien mit dem einen oder den mehreren Medien-Ausgängen eines drehbaren Bauteils über Verbindungsleitungen verbunden sind. Die Verbindungsleitungen können flexible Schlauchleitungen sein.

Es können aber auch starre Leitungen vorgesehen sein, die gleichzeitig die Funktion der Kopplungselemente übernehmen können.

Die erfindungsgemäße Transporteinrichtung zeichnet sich vorzugsweise dadurch aus, dass dem mindestens einen Objekt-Trägerelement ein Mitnehmerelement und ein Halteelement zugeordnet sind. Das Mitnehmerelement kann einen aktiven Zustand, in dem eine Relativbewegung von Objekt-Trägerelement und Objektträger verhindert wird, und einen nicht aktiven Zustand einnehmen, in dem eine Relativbewegung von Objekt-Trägerelement und Objektträger zugelassen wird. Zwischen diesen beiden Zuständen kann das Mitnehmerelement bewegt bzw. umgeschaltet werden. Das Halteelement kann einen aktiven Zustand, in dem das Objekt-Trägerelement festgehalten wird, und einen nicht aktiven Zustand einnehmen, in dem das Objekt-Trägerelement freigegeben wird. Zwischen diesen beiden Zuständen kann das Halteelement bewegt bzw. umgeschaltet werden.

Die Betätigung des mindestens einen Mitnehmerelements und des mindestens einen Halteelements erfolgt mittels einer Betätigungseinheit. Die Betätigungseinheit für die Mitnehmerelemente und Halteelemente kann über Betätigungsorgane verfügen, mit denen Mitnehmer- und Halteelemente zwischen den beiden Positionen bewegt werden können. Derartige Betätigungsorgane werden auch als Aktor-Einheiten im Sinne der Erfindung verstanden. Die Betätigungseinheit kann beispielsweise einen elektromotorischen und/oder pneumatischen und/oder hydraulischen Antrieb aufweisen.

Die Betätigungseinheit ist derart ausgebildet, dass in einzelnen Arbeitstakten der aufeinanderfolgenden Arbeitstakte das Mitnehmerelement einen aktiven Zustand und das Halteelement einen inaktiven Zustand einnimmt, so dass das jeweilige Objekt-Trägerelement von dem Objektträger mitgenommen und von Arbeitsstation zu Arbeitsstation bewegt wird. Die Betätigungseinheit ist darüber hinaus derart ausgebildet, dass in einzelnen Arbeitstakten der aufeinanderfolgenden Arbeitstakte, das Mitnehmerelement einen inaktiven Zustand und das Halteelement einen aktiven Zustand einnimmt, so dass das Objekt-Trägerelement an einer Arbeitsstation verbleibt.

Die Betätigung des mindestens einen Mitnehmer- bzw. Halteelements durch die Betätigungseinheit erlaubt somit eine Bewegung des Objektträgers zum Transport von Objekten zu einer Arbeitsstation mit einer kurzen Prozesszeit, während ein Objekt-Trägerelement an einer Arbeitsstation mit einer langen Prozesszeit verbleibt.

Wenn der gesamte Produktionsprozess mit mehreren Arbeitsprozessen nur einen Arbeitsprozess mit einer langen Prozesszeit umfasst, ist es grundsätzlich ausreichend, wenn nur ein Objekt-Trägerelement auf dem Objektträger in Richtung der Bewegungsbahn, auf der die Objekt-Trägerelemente von Arbeitsstation zu Arbeitsstation transportierbar sind, relativ zum Objektträger verschiebbar angeordnet ist. Dieses Objekt-Trägerelement kann dann bei der Arbeitsstation mit der langen Prozesszeit verbleiben. Bei nur einem Objekt-Trägerelement ist nur ein Mitnehmer- bzw. Halteelement erforderlich. Bei zwei Objekt-Trägerelementen beispielsweise sind mindestens zwei Mitnehmer- bzw. Halteelemente erforderlich, wenn die beiden Trägerelemente unabhängig voneinander gesteuert werden sollen.

Eine bevorzugte Ausführungsform der Transporteinrichtung sieht vor, dass sämtliche Objekt-Trägerelemente auf dem Objektträger frei bewegbar sind, wobei jedem Objekt-Trägerelement ein Mitnehmerelement und ein Halteelement zugeordnet sind. Dadurch lassen sich sämtliche Objekt-Trägerelemente unabhängig voneinander steuern.

Eine besonders bevorzugte Ausführungsform sieht eine kreisförmige Führungsbahn vor, in der die Objekt-Trägerelemente in Bezug auf den Objektträger frei bewegbar geführt sind, so dass sie in Bezug auf ein ortsfestes räumliches Koordinatensystem festgehalten werden können. Die Führungsbahn kann unterschiedlich ausgebildet sein. Allein entscheidend ist, dass die Objekt-Trägerelemente sich nur auf der Bewegungsbahn bewegen können.

Zur Aufnahme der Objekte weisen die Objekt-Trägerelemente vorzugsweise Aufnahmeelemente auf, in die oder auf die sich die Objekte ein- bzw. auflegen lassen. Dadurch sind die Objekte an den Objekt-Trägerelementen ausreichend fixiert.

Die Mitnehmerelemente und Halteelemente können unterschiedlich ausgebildet sein. Allein entscheidend ist, dass eine ausreichende Fixierung der Objekt-Trägerelemente erfolgen kann. Die Fixierung kann durch eine formschlüssige und/oder kraftschlüssige Verbindung erfolgen. Die Mitnehmerelemente sind vorzugsweise derart ausgebildet, dass sie eine form- bzw. kraftschlüssige Verbindung zwischen einem Teil des Objekt-Trägerelements und einem Teil des Objektträgers herstellen, während die Halteelemente derart ausgebildet sind, dass eine form- bzw. kraftschlüssige Verbindung zwischen einem Teil des Objekt-Trägerelements und einem ortsfesten Teil hergestellt wird.

Durch die Steuerung der Antriebseinheit des Objektträgers und der Betätigung der Mitnehmer- bzw. Halteelemente werden die Objekt-Trägerelemente mit den Objekten in der gewünschten Bearbeitungsposition gegenüber der jeweiligen Arbeitsstation positioniert und können von einer Arbeitsstation zu einer anderen Arbeitsstation weiterbewegt werden.

Die erfindungsgemäße Transporteinrichtung kann in unterschiedlichen Produktionsanlagen Verwendung finden. Bei einer besonders bevorzugten Ausführungsform findet die erfindungsgemäße Transporteinrichtung in einer Produktionsanlage zur Herstellung von mit einem medizinischen Produkt, insbesondere einem Arzneimittel, befüllten Behältnissen Verwendung, insbesondere zur Herstellung von medizinischen Lösungsbeuteln, beispielsweise Lösungsbeutel für die Peritonealdialyse oder die Akut-Hämodialyse oder die Infusionstechnik.

Das Verfahren zum Transport von Objekten von Arbeitsstation zu Arbeitsstation einer Produktionsanlage, das aber nicht Gegenstand der Erfindung ist, weist die folgenden Arbeitsschritte auf:
Anordnen einer Mehrzahl von Objekt-Trägerelementen zur Ablage von einem oder mehreren Objekten auf einem drehbaren Objektträger,

Drehen des Objektträgers in aufeinanderfolgenden Arbeitstakten derart, dass die Objekt-Trägerelemente auf einer kreisförmigen Bewegungsbahn von Arbeitsstation zu Arbeitsstation transportiert werden, wobei
mindestens ein Objekt-Trägerelement der Mehrzahl von Objekt-Trägerelementen auf dem Objektträger in Richtung der kreisförmigen Bewegungsbahn relativ zum Objektträger verschiebbar angeordnet wird,
in einzelnen Arbeitstakten der aufeinanderfolgenden Arbeitstakte eine Relativbewegung von dem mindestens einen Objekt-Trägerelement und dem Objektträger verhindert wird, so dass das mindestens eine Objekt-Trägerelement von dem Objektträger mitgenommen und von Arbeitsstation zu Arbeitsstation bewegt wird, und
in einzelnen Arbeitstakten der aufeinanderfolgenden Arbeitstakte eine Relativbewegung von dem mindestens einen Objekt-Trägerelement und dem Objektträger zugelassen wird und das mindestens eine Objekt-Trägerelement festgehalten wird, so dass das mindestens eine Trägerelement an einer Arbeitsstation verbleibt.

Das Verfahren, das aber nicht Gegenstand der Erfindung ist,zeichnet sich dadurch aus, dass Aktor-Einheiten (Betätigungsorgane), die an den Objekt-Trägerelementen angeordnet sind, mit einem oder mehreren Medien versorgt werden, wobei die Zuführung des Mediums oder der Medien zu den Objekt-Trägerelementen über eine Drehdurchführung, insbesondere die erfindungsgemäße Drehdurchführung, erfolgt. Die Zuführung des Mediums oder der Medien über die erfindungsgemäße Drehdurchführung hat den Vorteil, dass an den Objekt-Trägerelementen vorgesehene Betätigungsorgane betrieben werden können.

Nachfolgend wird ein Ausführungsbeispiel der Erfindung unter Bezugnahme auf die Zeichnungen näher erläutert.

Es zeigen:

Fig. 1    eine Draufsicht auf ein Ausführungsbeispiel einer Transporteinrichtung in stark vereinfachter schematischer Darstellung, für die die erfindungsgemäße Drehdurchführung bestimmt ist,

Fig. 2    die Transporteinrichtung von Fig. 2 in schematischer Schnittdarstellung,

Fig. 3    den ersten Arbeitsschritt eines Verfahrens zur Herstellung von Produkten mit der Transporteinrichtung in schematischer Draufsicht,

Fig. 4    den zweiten Arbeitsschritt des Herstellungsverfahrens in schematischer Draufsicht,

Fig. 5 den dritten Arbeitsschritt des Verfahrens in schematischer Draufsicht,

Fig. 6 den vierten Arbeitsschritt des Verfahrens in schematischer Draufsicht,

Fig. 7 den fünften Arbeitsschritt des Verfahrens in schematischer Draufsicht,

Fig. 8 einen kleinen Arbeitstakt des sechsten Arbeitsschrittes des Verfahrens in schematischer Draufsicht,

Fig. 9 einen großen Arbeitstakt des sechsten Arbeitsschrittes des Verfahrens in schematischer Draufsicht,

Fig. 10 die erfindungsgemäße Transporteinrichtung, die über die erfindungsgemäße Drehdurchführung verfügt, in stark vereinfachter schematischer Darstellung,

Fig. 11 eine vergrößerte Teilansicht der erfindungsgemäßen Drehdurchführung in geschnittener Darstellung, und

Fig. 12 eine vergrößerte Teilansicht einer weiteren Ausführungsform der erfindungsgemäßen Drehdurchführung in geschnittener Darstellung.

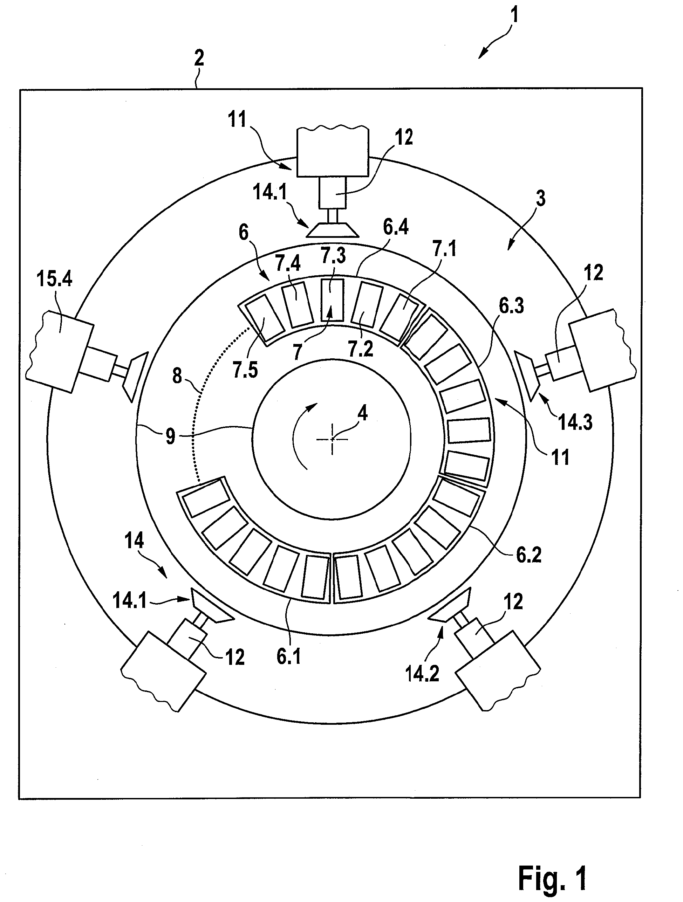

Die erfindungsgemäße Drehdurchführung ist für eine Transporteinrichtung bestimmt, die unter Bezugnahme auf die Figuren 1 bis 9 nachfolgend im Einzelnen beschrieben wird. Die Transporteinrichtung ist Gegenstand der nicht veröffentlichten deutschen Patentanmeldung DE 10 2016 004 335.0.

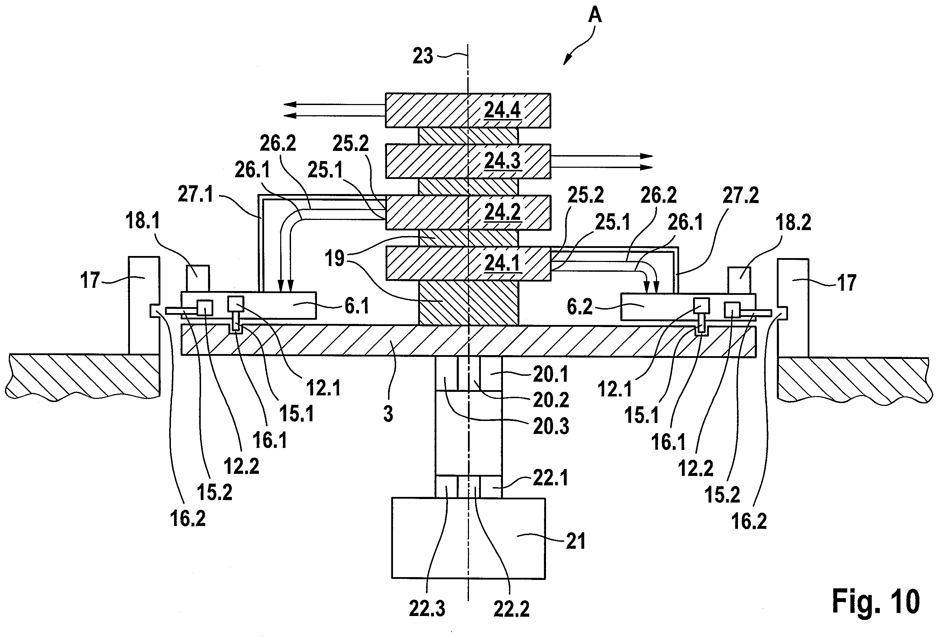

Die erfindungsgemäße Transporteinrichtung mit der erfindungsgemäßen Drehdurchführung wird unter Bezugnahme auf die Figuren 10 bis 12 beschrieben.

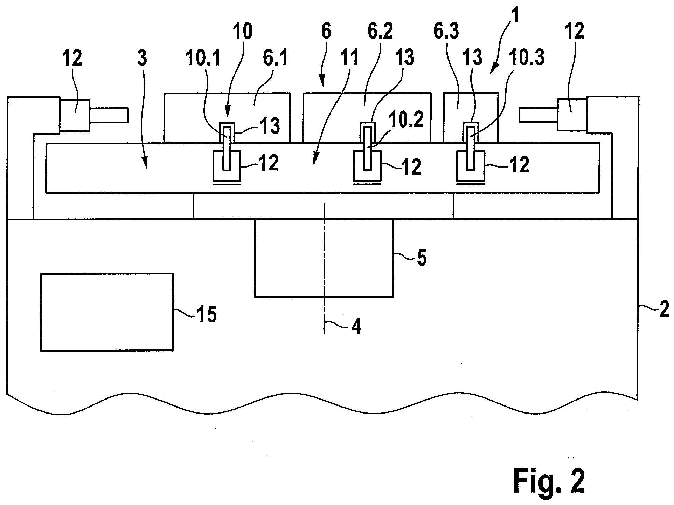

Die Figuren 1 und 2 zeigen in stark vereinfachter schematischer Darstellung ein Ausführungsbeispiel der erfindungsgemäßen Transporteinrichtung in der Draufsicht (Fig. 1) und der Seitenansicht (Fig. 2) ohne die erfindungsgemäße Drehdurchführung. In den Figuren sind nur die für die Erfindung wesentlichen Komponenten der Transporteinrichtung dargestellt. Die Figuren dienen nur der Veranschaulichung. Die Größenverhältnisse zwischen den einzelnen Komponenten müssen nicht den tatsächlichen Verhältnissen entsprechen.

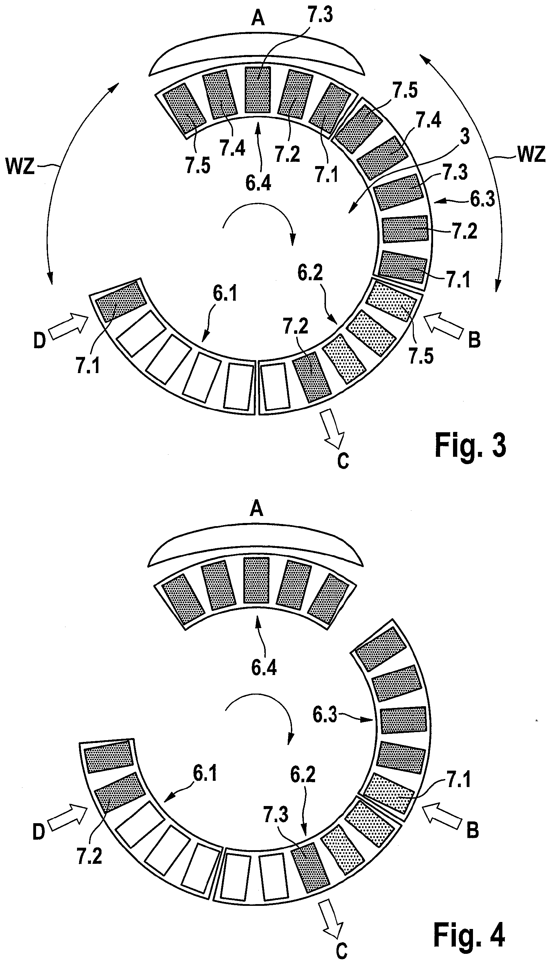

Die Transporteinrichtung ist als Rundschalttisch ausgebildet. Der Rundschalttisch 1 weist ein Gehäuse 2 auf, das einen Objektträger 3 aufnimmt, der um eine vertikale Mittelachse 4 von einer Antriebseinheit 5 drehbar ist. In den Figuren 3 bis 10 steht die vertikale Mittelachse 4 senkrecht auf der Bildebene. Die Antriebseinheit 5 dreht den Objektträger 3 in aufeinanderfolgenden Arbeitstakten schrittweise um einen fest vorgegebenen Drehwinkel.

Der Objektträger 3 nimmt eine Mehrzahl von Objekt-Trägerelementen auf. Bei dem vorliegenden Ausführungsbeispiel nimmt der Objektträger 3 die Objekt-Trägerelemente 6.1, 6.2, 6.3, 6.4 auf. Die Objekt-Trägerelemente 6 weisen jeweils eine Mehrzahl von Aufnahmeelementen 7 auf. Bei dem vorliegenden Ausführungsbeispiel weisen die Objekt-Trägerelemente 6 jeweils fünf Aufnahmeelemente 7.1, 7.2, 7.3, 7.4, 7.5 auf. Jedes Aufnahmeelement kann ein Objekt aufnehmen. Es ist aber auch möglich, dass jedes Objekt-Trägerelement 6 nur ein Aufnahmeelement aufweist, wobei es auch möglich ist, dass ein Aufnahmeelement 7 auch mehrere Objekte aufnimmt. Die Aufnahmeelemente können beispielsweise Schalen, Ständer, Halterungen oder dergleichen sein.

Die Objekt-Trägerelemente 6 sind auf dem Objektträger 3 umfangsmäßig verteilt angeordnet. Sie beschreiben jeweils die Form eines Kreissegments. Wenn sich der Objektträger dreht, beispielsweise im Uhrzeigersinn, wie durch einen Pfeil dargestellt ist, können sich die Trägerelemente 6 auf einer kreisförmigen Bewegungsbahn 8 bewegen. Die Objekt-Trägerelemente 6 sind aber nicht fest mit dem Objektträger 3 verbunden, sondern in einer nur schematisch dargestellten Führung 9 in Richtung der Kreisbahn 8 verschiebbar geführt. Wenn die Objekt-Trägerelemente 6 also von außen festgehalten werden, kann sich der Objektträger 3 drehen, ohne dass die Objekt-Trägerelemente mitgenommen werden.

Bei dem vorliegenden Ausführungsbeispiel haben die einzelnen Trägerelemente 6 einen Umfangswinkel von jeweils 360°/5 = 72°. Da nur vier Objekt-Trägerelemente 6.1, 6.2, 6.3, 6.4 vorgesehen sind, bleibt ein Abschnitt der kreisförmigen Bewegungsbahn 8 frei. Dieser Freiraum erlaubt ein Verschieben der Objekt-Trägerelemente 6 relativ zum Objektträger 3, ohne dass die Objekt-Trägerelemente sich gegenseitig blockieren. Die Anzahl der Objekt-Trägerelemente 6 und der Umfangswinkel der Objekt-Trägerelemente 6 sind von der Anordnung und Anzahl der Arbeitsstationen abhängig.

Bei dem vorliegenden Ausführungsbeispiel, das nachfolgend im Einzelnen unter Bezugnahme auf die Figuren 3 bis 9 beschrieben wird, ist die Transporteinrichtung Teil einer Produktionsanlage, die über vier Arbeitsstationen verfügt. In den Figuren 1 und 2 sind die Arbeitsstationen nicht dargestellt. Sie sind um den Objektträger 3 des Rundschalttisches 1 umfangsmäßig verteilt angeordnet.

Die Transporteinrichtung verfügt weiterhin über eine Mehrzahl von Mitnehmerelementen. Bei dem vorliegenden Ausführungsbeispiel sind sämtliche Objekt-Trägerelemente 6 verschiebbar geführt. Daher ist jedem Objekt-Trägerelement 6.1, 6.2, 6.3, 6.4 ein Mitnehmerelement 10 zugeordnet. In Fig. 2 sind nur drei Mitnehmerelemente 10.1, 10.2, 10.3 gezeigt. Sämtliche Mitnehmerelemente werden von einer Betätigungseinheit betätigt, die den einzelnen Mitnehmerelementen zugeordnete Betätigungsorgane 12 aufweist. In den Figuren 1 und 2 ist die Betätigungseinheit als eine Einrichtung, die die Betätigungsorgane 12 aufweist, mit dem Bezugszeichen 11 bezeichnet. Die Betätigungsorgane 12 können beispielsweise elektrische, magnetische, elektromagnetische, pneumatische oder hydraulische Antriebe umfassen.

Die Mitnehmerelemente 10 sind bei dem vorliegenden Ausführungsbeispiel Stifte, die in Ausnehmungen 13 der Objekt-Trägerelemente 6 greifen. Die Mitnehmerelemente 10 können von den Betätigungsorganen 12 der Betätigungseinheit 11 derart betätigt werden, dass sie einen Zustand einnehmen, in dem sie in eine Ausnehmung 13 eines Objekt-Trägerelements 6 greifen oder aus der Ausnehmung zurückgezogen sind. Dadurch können die Objekt-Trägerelemente 6 an dem Objektträger 3 festgestellt werden. Die Betätigungsorgane 12 können von der Betätigungseinheit 11 unabhängig voneinander betätigt werden. Die Objekt-Trägerelemente 6 sind unabhängig voneinander arretierbar.

Darüber hinaus weist die Transporteinrichtung eine Mehrzahl von Halteelementen 14 auf. Bei dem vorliegenden Ausführungsbeispiel ist jedem Objekt-Trägerelement 6 ein Halteelement 14.1, 14.2, 14.3, 14.4, (14.5) zugeordnet. Die Haltelemente 14 werden von den Betätigungsorganen 12 der Betätigungseinheit 11 betätigt. Die Betätigungsorgane 12 für die Haltelemente können beispielsweise elektrische, magnetische, elektromagnetische, pneumatische oder hydraulische Antriebe umfassen. Die Halteelemente 14 sind umfangsmäßig verteilt, um den Objektträger 3 angeordnet. Sie bewegen sich nicht wie die Mitnahmeelemente 10 zusammen mit dem Objektträger 3, sondern sind fest mit dem Gehäuse 2 der Transporteinrichtung verbunden. Die Halteelemente 14 können beispielsweise in Längsrichtung verschiebbare Druckstempel sein, die auf die äußeren Umfangsflächen der Objekt-Trägerelemente 6 gedrückt werden, so dass die Objekt-Trägerelemente von außen festgehalten werden.

Des Weiteren verfügt die Transporteinrichtung über eine Steuereinheit 15 für die Betätigungseinheit 11. Die Steuereinheit 15 kann eine frei programmierbare Steuereinheit sein, mit der die einzelnen Betätigungsorgane 12 der Betätigungseinheit 11 unabhängig voneinander zu bestimmten Zeitpunkten angesteuert werden können, so dass die Mitnehmer- und Halteelemente 10, 14 betätigt werden.

Die Steuereinheit 15 ist derart ausgebildet, dass in einzelnen Arbeitstakten das einem Objekt-Trägerelement 6 zugeordnete Mitnehmerelement 10 einen aktiven Zustand und das dem Objekt-Trägerelement zugeordnete Halteelement 14 einen nicht aktiven Zustand einnimmt, so dass das Objekt-Trägerelement 6 von dem Objektträger 3 mitgenommen und von Arbeitsstation zu Arbeitsstation bewegt wird. Die Steuereinheit 15 ist ferner derart ausgebildet, dass in einzelnen Arbeitstakten das dem Objekt-Trägerelement 6 zugeordnete Mitnehmerelement 10 einen inaktiven Zustand und das Halteelement 14 einen aktiven Zustand einnimmt, so dass das Objekt-Trägerelement an einer Arbeitsstation verbleibt.

Die Figuren 3 bis 9 zeigen die einzelnen Arbeitsschritte eines Verfahrens zur Herstellung eines Produktes. Bei dem vorliegenden Ausführungsbeispiel ist das Herstellungsverfahren ein Verfahren zur Herstellung von mit einem medizinischen Produkte befüllten Behältnissen, insbesondere von mit einer medizinischen Lösung befüllten Beuteln, insbesondere Folienbeutel für die Peritonealdialyse. Die Figuren 3 bis 9 dienen nur zur Veranschaulichung des Grundprinzips des Verfahrens. Daher sind nicht sämtliche Verfahrensschritte dargestellt, die zur Herstellung der Produkte erforderlich sind.

Die Produktionsanlage umfasst mindestens eine der unter Bezugnahme auf die Figuren 1 und 2 beschriebenen Transporteinrichtung. Fig. 3 zeigt in schematischer Darstellung nur die vier Objekt-Trägerelemente 6.1, 6.2, 6.3, 6.4 der Transporteinrichtung (Drehschalttisch). Die Produktionsanlage weist bei dem vorliegenden Ausführungsbeispiel vier nur andeutungsweise dargestellte Arbeitsstationen A, B, C, D auf, die umfangsmäßig verteilt um den Objektträger 3 angeordnet sind. Die Behältnisse, insbesondere Folienbeutel, werden als Rohlinge bereitgestellt, die nicht mit einem Anschlussstück, insbesondere mit einem Einschweissschiffchen, versehen und nicht mit dem medizinischen Produkt, insbesondere einer Flüssigkeit, beispielsweise einer Lösung für die Peritonealdialyse, befüllt sind. Die Arbeitsstation A ist eine Füllstation, mit der die mit dem Anschlussstück versehenen Beutel befüllt werden. Das Befüllen der Beutel ist ein Arbeitsprozess mit einer langen Prozesszeit. Die Prozesszeit ist deutlich länger als die Prozesszeit der anderen Arbeitsstationen. Die Arbeitsstation B mit einer kurzen Prozesszeit ist eine Arbeitsstation, mit der die Beutelrohlinge mit den Anschlussstücken bestückt werden. Die Arbeitsstation C ist eine Arbeitsstation zur Entnahme der mit dem Anschlussstück versehenen und befüllten Beutel, und die Arbeitsstation D ist eine Arbeitsstation zum Auflegen der Beutelrohlinge. Die Arbeitsstationen B, C, D haben eine Prozesszeit, die kürzer als die Prozesszeit der Arbeitsstation A ist.

Die Antriebseinheit 5 dreht den Objektträger 3 schrittweise in aufeinanderfolgenden kurzen oder langen Arbeitstakten im Uhrzeigersinn. Bei dem vorliegenden Ausführungsbeispiel wird der Objektträger 3 in einem kurzen Arbeitstakt um 14,4° im Uhrzeigersinn gedreht (360° / 5 (5 Trägerelemente)/5 (5 Aufnahmeelemente 7.1, 7.2, 7.3, 7.4, 7.5 pro Trägerelement = 14,4°). Die Mitnehmerelemente 10 und Halteelemente 14 (Fig. 1 und Fig. 2) sind in den Figuren 3 bis 9 nicht dargestellt.

Das beschriebene Verfahren zeichnet sich durch eine Kombination aus Einzeltakten für die Arbeitsstationen B, C, D mit kurzer Prozesszeit und Vielfachtakten für die Arbeitsstation A mit langer Prozesszeit aus. Dafür ist das Auffangen der Einzeltakte vor der Arbeitsstation A mit langer Prozesszeit und das Auffangen des Vielfachtaktes nach der Arbeitsstation A mit langer Prozesszeit erforderlich. Das Auffangen der Einzeltakte und des Vielfachtaktes erfolgt in Wartezonen WZ in Drehrichtung (im Uhrzeigersinn) vor und hinter der Arbeitsstation A mit langer Prozesszeit. Nachfolgend werden die einzelnen Arbeitsschritte beschrieben.

Fig. 3 zeigt den ersten Arbeitsschritt (Ausgangsposition). Die vier Objekt-Trägerelemente 6.1, 6.2, 6.3, 6.4 sind derart angeordnet, dass sich in der Wartezone WZ vor der Arbeitsstation A mit langer Prozesszeit im ersten Arbeitsschritt kein Objekt-Trägerelement befindet. Die Beutelrohlinge befinden sich in den Aufnahmeelementen 7.1, 7.2, 7.3, 7.4, 7.5 des dritten und vierten Objekt-Trägerelements 6.3, 6.4. Die Wartezone WZ vor der Arbeitsstation A mit langer Prozesszeit ist leer und die Wartezone WZ hinter der Arbeitsstation A ist voll. Die Arbeitsstation A für den Füllprozess mit der langen Prozesszeit und die Arbeitsstationen B, C, D für die Arbeitsprozesse mit den kurzen Arbeitszeiten sind im Betrieb. Die Arbeitsstation B bestückt den in dem fünften Aufnahmeelement 7.5 des zweiten Objekt-Trägerelements 6.2 befindlichen befüllten Beutel mit einem Anschlussstück, beispielsweise mit einer Abdeckkappe. Die Arbeitsstation C entnimmt den in dem zweiten Aufnahmeelement 7.2 des zweiten Objekt-Trägerelements 6.2 befindlichen mit dem Anschlussstück versehenen und mit der Lösung befüllten, fertigen Beutel und die Arbeitsstation D bestückt das erste Aufnahmeelement 7.1 des ersten Objekt-Trägerelements 6.1 mit einem Beutelrohling.

Fig. 4 zeigt den zweiten Arbeitsschritt. Die Steuereinheit 15 steuert die Betätigungseinheit 11 derart an, dass die dem ersten, zweiten und dritten Objekt-Trägerelement 6.1, 6.2, 6.3 zugeordneten Mitnehmerelemente 10 aktiv und die diesen Objekt-Trägerelementen zugeordneten Halteelemente 14 inaktiv sind, während das dem vierten Objekt-Trägerelement 6.4 zugeordnete Mitnehmerelement 10 inaktiv und das diesem Objekt-Trägerelement zugeordnete Halteelement 14 aktiv ist. Folglich werden das erste, zweite und dritte Objekt-Trägerelement 6.1, 6.2, 6.3 bei einer Drehung des Objektträgers 3 im Uhrzeigersinn mitgenommen und das vierte Objekt-Trägerelement 6.4 festgehalten. Nachdem sich der Objektträger 3 um einen vorgegebenen Drehwinkel (360°/(5 x 5) = 14,4°) gedreht hat, ist die Wartezone WZ vor dem langen Prozess mit einem Beutelrohling einfach bestückt und die Wartezone WZ nach dem langen Prozess vierfach mit befüllten Beuteln belegt. Die Arbeitsstation B bestückt den in dem ersten Aufnahmeelement 7.1 des dritten Objekt-Trägerelements 6.3 befindlichen befüllten Beutel mit einem Anschlussstück. Die Arbeitsstation C entnimmt den in dem dritten Aufnahmeelement 7.3 des zweiten Objekt-Trägerelements 6.2 befindlichen mit dem Anschlussstück versehenen und mit der Lösung befüllten, fertigen Beutel und die Arbeitsstation D bestückt das zweite Aufnahmeelement 7.2 des ersten Objekt-Trägerelements 6.1 mit einem Beutelrohling.

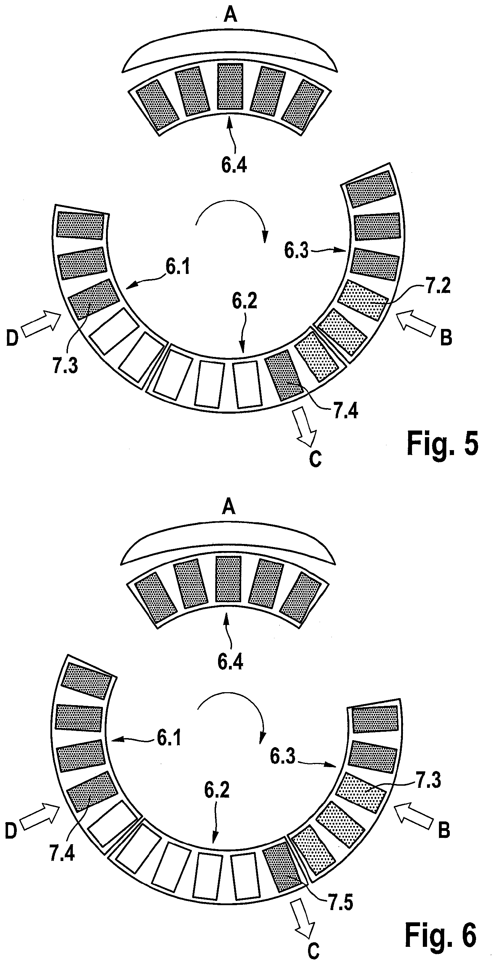

Im dritten Arbeitsschritt (Fig. 5) steuert die Steuereinheit 15 die Betätigungseinheit 11 wieder derart an, dass das erste, zweite und dritte Objekt-Trägerelement 6.1, 6.2, 6.3 mitgenommen und das vierte Objekt-Trägerelement 6.4 festgehalten wird. Der Objektträger 3 dreht sich wieder um einen vorgegebenen Drehwinkel (14,4°). Nach der Drehung des Objektträgers 3 ist die Wartezone WZ vor dem langen Prozess zweifach mit Beutelrohlingen bestückt und die Wartezone nach dem langen Prozess dreifach mit befüllten Beuteln belegt. Die Arbeitsstation B bestückt jetzt den im zweiten Aufnahmeelement 7.2 des dritten Objekt-Trägerelements 6.3 befindlichen befüllten Beutel mit einem Anschlussstück. Die Arbeitsstation C entnimmt den fertigen Beutel aus dem vierten Aufnahmeelement 7.4 des zweiten Objekt-Trägerelements 6.2 und die Arbeitsstation D bestückt das dritte Aufnahmeelement 7.3 des ersten Objekt-Trägerelements 6.1 mit einem Beutelrohling.

Im vierten Arbeitsschritt (Fig. 6) werden wieder das erste, zweite und dritte Objekt-Trägerelement 6.1, 6.2, 6.3 mitgenommen, während das vierte Objekt-Trägerelement 6.4 festgehalten wird. Nach der Drehung des Objekt-Trägerelements um den vorgegebenen Drehwinkel (14,4°) ist die Wartezone WZ vor dem langen Prozess dreifach mit Beutelrohlingen und die Wartezone WZ nach dem langen Prozess zweifach mit befüllten Beuteln belegt. Die Arbeitsstation B bestückt den in dem dritten Aufnahmeelement 7.3 des dritten Objekt-Trägerelements 6.3 befindlichen befüllten Beutel mit einem Anschlussstück, die Arbeitsstation B entnimmt den fertigen Beutel aus dem fünften Aufnahmeelement 7.5 des zweiten Objekt-Trägerelements 6.2 und die Arbeitsstation D beschickt das vierte Aufnahmeelement 7.4 des ersten Objekt-Trägerelements 6.1 mit einem Beutelrohling.

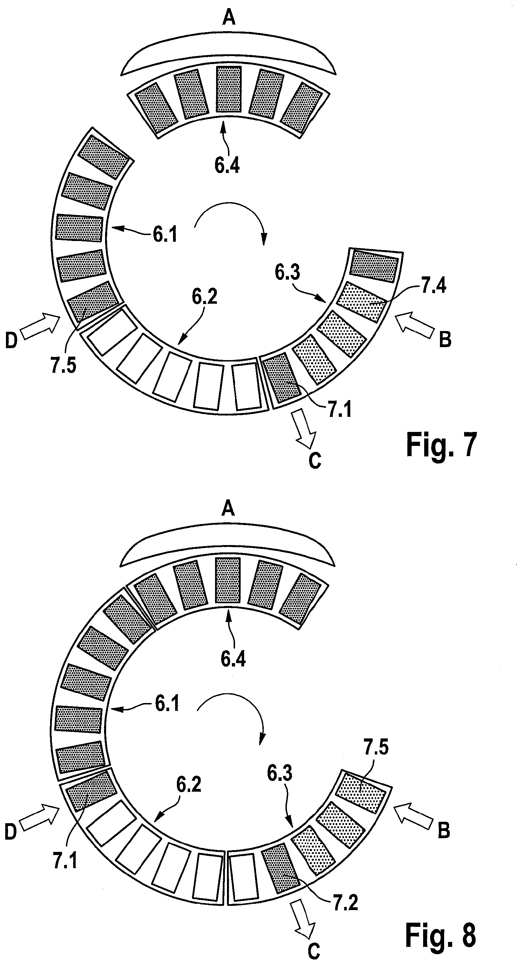

Im fünften Arbeitsschritt (Fig. 7) werden das erste, zweite und dritte Objekt-Trägerelement 6.1, 6.2, 6.3 mitgenommen, während das vierte Objekt-Trägerelement 6.4 festgehalten wird. Nach einer Drehung des Objektträgers 3 um den vorgegebenen Drehwinkel (14,4°) ist die Wartezone WZ vor dem langen Prozess vierfach mit Beutelrohlingen bestückt und die Wartezone WZ nach dem langen Prozess einfach mit befüllten Beuteln belegt. Der in dem vierten Aufnahmeelement 7.4 des dritten Objekt-Trägerelements 6.3 befindliche befüllte Beutel wird mit dem Anschlussstück bestückt, der in dem ersten Aufnahmeelement 7.1 des dritten Objekt-Trägerelements 6.3 befindliche fertige Beutel wird entnommen und das fünfte Aufnahmeelement 7.5 des ersten Objekt-Trägerelements 6.1 wird mit einem Beutelrohling beschickt.

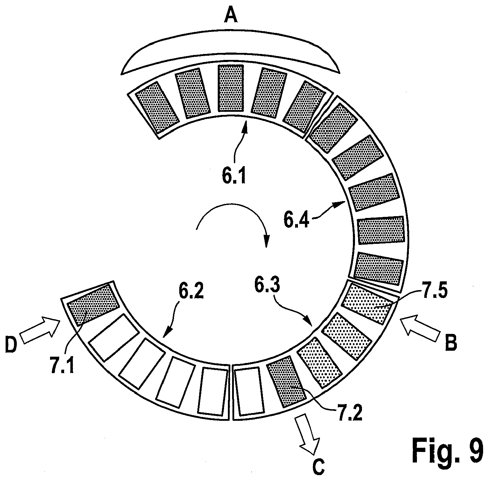

Nunmehr schließt sich der sechste Arbeitsschritt an, der einen kleinen Takt (Fig. 8) mit einer Drehung des Objektträgers um einen Drehwinkel von 14,4° und einen großen Takt (Fig. 9) mit einer Drehung des Objektträgers 3 um einen Drehwinkel von 72° (5* 14,4°=72°) umfasst. In dem kleinen Takt werden das erste, zweite und dritte Objekt-Trägerelement 6.1, 6.2, 6.3 mitgenommen und das vierte Objekt-Trägerelement 6.4 festgehalten. Nach der Drehung des Objektträgers um 14,4° (kleiner Takt) ist die Wartezone WZ vor dem langen Prozess voll und die Wartezone WZ nach dem langen Prozess leer. Der in dem fünften Aufnahmeelement 7.5 des dritten Objekt-Trägerelements 6.3 befindliche befüllte Beutel wird mit einem Anschlussstück bestückt, der fertige Beutel wird aus dem zweiten Aufnahmeelement 7.2 des dritten Objekt-Trägerelements 6.1 entnommen und das erste Aufnahmeelement 7.1 des zweiten Objekt-Trägerelements 6.2 wird mit einem Beutelrohling beschickt.

In dem sich an den kleinen Takt anschließenden großen Takt (Fig. 9) des sechsten Arbeitsschrittes steuert die Steuereinheit 15 die Betätigungseinheit 11 derart an, dass das erste und vierte Objekt-Trägerelement 6.1, 6.4 mitgenommen und das zweite und dritte Objekt-Trägerelement 6.2, 6.3 festgehalten wird. Der Objektträger 3 dreht sich im großen Takt um 72° (5* 14,4°=72°). Nach der Drehung des Objektträgers 3 ist die Wartezone WZ vor dem langen Prozess leer und die Wartezone WZ nach dem langen Prozess voll, so dass sich wieder der erste Arbeitsschritt (Fig. 3) anschließen kann.

Im sechsten Arbeitsschritt ist die Summe aus der Taktzeit kurzer Takt $t_{TK}$ und der Taktzeit langer Takt $t_{TL}$ kleiner als die Gesamtprozesszeit kurzer Takt $t_{GK}$ ($t_{TK}+t_{TL}<t_{GK}$).

Der oben beschriebene Prozess entspricht einer 5-fach Parallelschaltung des längsten Prozesses.

Bei der Auslegung der Produktionsanlage ergeben sich die folgenden Gesetzmäßigkeiten:

| | |
|---|---|
| $t_{PK}$ | Prozesszeit kurzer Prozess |
| $t_{PL}$ | Prozesszeit langer Prozess |
| $t_{TK}$ | Taktzeit kurzer Takt |
| $t_{TL}$ | Taktzeit langer Takt |
| $t_{GK}$ | Gesamtprozesszeit kurzer Takt |
| $t_{GL}$ | Gesamtprozesszeit langer Takt |
| S | Skalierfaktor |
| WZ | Wartezone |
| $A_{OTE}$ | Anzahl Objekt-Trägerelemente |
| $A_{WZ}$ | Anzahl Wartezonen |
| LP | Prozess mit langer Prozesszeit |
| KP | Prozess mit kurzer Prozesszeit |

Gesamtprozesszeit kurzer Takt:

$$t_{GK}=t_{PK}+t_{TK}$$

Kurzer und langer Takt müssen zwingend innerhalb der Taktzeit des kurzen Taktes liegen:

$$t_{TK}+t_{TL}<t_{GK}$$

Gesamtprozesszeit langer Takt:

$$t_{GL}=t_{PL}+t_{TLK}$$

Berechnung der notwendigen Vervielfachung des längsten Prozessschrittes:

$$t_{GL}/t_{GK}=S$$

Je nach Festlegung, welcher Anlagenteil Engpass der gesamten Anlage sein soll, muss S auf- oder abgerundet werden.

Anzahl gekoppelter Objektträger pro Segment:

$$S*Objektträger=Objekt\text{-}Trägerelement$$

Anzahl Objekt-Trägerelemente pro System: $A_{OTE}\geq2$ (1 x kurzer Prozess, 1 x langer Prozess)

Anzahl WZ pro System: $A_{WZ}\geq2$ (pro Wechsel von kurzem Prozess zu langem Prozess WZ notwendig, pro Wechsel von langem Prozess zu kurzem Prozess WZ notwendig)

Nachfolgend werden die erfindungsgemäße Drehdurchführung und die erfindungsgemäße Transporteinrichtung mit der erfindungsgemäßen Drehdurchführung unter Bezugnahme auf die Figuren 10 bis 12 beschrieben. Die einander entsprechenden Teile sind mit denselben Bezugszeichen versehen. Das beschriebene Ausführungsbeispiel der erfindungsgemäßen Transporteinrichtung unterscheidet sich von der Transporteinrichtung gemäß der Figuren 1 bis 9 dadurch, dass die erfindungsgemäße Drehdurchführung vorgesehen ist. Die Drehdurchführung ist in Fig. 10 mit dem Bezugszeichen A bezeichnet. Darüber hinaus unterscheidet sich das beschriebene Ausführungsbeispiel der erfindungsgemäßen Transporteinrichtung von der Transporteinrichtung gemäß der Figuren 1 bis 9 durch die Betätigungseinheit zur Betätigung der Betätigungsorgane für die Haltelemente und die Mitnehmerelemente. Sämtliche Betätigungsorgane der Haltelemente und der Mitnehmerelemente befinden sich an den Objekt-Trägerelementen. Die Haltelemente und Mitnehmerelemente sind bei dem vorliegenden Ausführungsbeispiel Stifte. Die Betätigungsorgane der stiftförmigen Haltelemente und der Mitnehmerelemente befinden sich an den Objekt-Trägerelementen 6. Die Objekt-Trägerelemente 6 weisen jeweils ein erstes Betätigungsorgan 12.1 auf, das ein stiftförmiges Mitnehmerelement 15.1 betätigt, das in eine Ausnehmung 16.1 des Objekträgers 3 vor- oder zurückgezogen werden kann, so dass das Objekt-Trägerelement 6. 1 von dem Objektträger 3 mitgenommen wird oder freigegeben wird. Darüber hinaus weisen die Objekt-Trägerelemente 6 ein zweites Betätigungsorgan 12.2 auf, das ein stiftförmiges Halteelement 15.2 betätigt, das in eine Ausnehmung 16.2 eines ortsfesten Bauteils 17 vor- oder zurückgezogen werden kann, so dass das Objekt-Trägerelement 6.2 an dem ortsfesten Bauteil 17 arretiert oder freigegeben wird. Bei diesem Ausführungsbeispiel sind also Betätigungsorgane, die ortsfesten Bauteilen zugeordnet sind, nicht vorhanden.

Darüber hinaus können einzelne oder sämtlichen Objekt-Trägerelementen 6 weitere Betätigungsorgane 18.1, 18.2 zugeordnet sein, die sich zusammen mit den Objekt-Trägerelementen bewegen. Diese Betätigungsorgane können der Betätigung von weiteren Einrichtungen dienen, die auf die Objekte einwirken. Diese Einrichtungen, die unterschiedliche Funktionen haben können, sind in den Figuren nicht dargestellt. An den Objekt-Trägerelementen 6 können auch Einrichtungen vorgesehen sein, die mit besonderen Betriebsmitteln versorgt werden, die mit der Drehdurchführung zugeführt werden können.

Unter den oben beschriebenen Betätigungsorganen werden Aktor-Einheiten im Sinne der Erfindung verstanden. Die Versorgung der Betätigungsorgane 12.1, 12.2; 18.1, 18.2 (Aktor-Einheiten) mit Medien erfolgt mit der erfindungsgemäßen Drehdurchführung A. Wenn die Betätigungsorgane pneumatische Betätigungsorgane sind, werden sie mit Druckluft versorgt. Elektrische oder elektromagnetische Betätigungsorgane werden mit Strom versorgt.

Die erfindungsgemäße Drehdurchführung weist ein feststehendes Bauteil 19 auf, das den Objektträger 3 im Zentrum durchdringen kann. Das feststehende Bauteil 19 weist mindestens einen Medieneingang 20 auf. Bei dem vorliegenden Ausführungsbeispiel ist eine Mehrzahl von in Fig. 10 nur andeutungsweise dargestellten Medien-Eingängen 20.1, 20.2, 20.3 vorgesehen, mit denen unterschiedliche Medien zugeführt werden können, u. a. Druckluft zur Betätigung der Betätigungsorgane.

Die Transporteinrichtung weist darüber hinaus eine zentrale Versorgungseinrichtung 21 auf, die über eine oder mehrere Versorgungsleitungen 22.1, 22. 2, 22.3, beispielsweise Schlauchleitungen oder elektrische Leitungen, die an den einen oder die mehreren Medien-Eingänge 20.1, 20.2, 20.3 der Drehdurchführung angeschlossen sind. Die Versorgungsleitungen sind in Fig. 10 nur andeutungsweise dargestellt.

Des Weiteren weist die Drehdurchführung mehrere gegenüber dem feststehenden Bauteil 19 unabhängig voneinander um eine gemeinsame Mittelachse 23 drehbare Bauteile 24.1, 24.2, 24.3, 24.4 auf. Die drehbaren Bauteile 24.1, 24.2, 24.3, 24.4 sind übereinander angeordnet. Bei dem vorliegenden Ausführungsbeispiel ist jedem Objekt-Trägerelement 6.1, 6.2, 6.3, 6.4 ein drehbares Bauteil 24.1, 24.2, 24.3, 24.4 zugeordnet. In Fig. 10 sind nur zwei der vier Objekt-Trägerelemente 6.1, 6.2, 6.3, 6.4 dargestellt. Folglich sind vier drehbare Bauteile vorgesehen. Die drehbaren Bauteile 24.1, 24.2, 24.3, 24.4 weisen jeweils einen oder mehrere Medien-Ausgänge 25.1, 25.2 auf. Bei dem vorliegenden Ausführungsbeispiel weisen die drehbaren Bauteile jeweils zwei Medienausgänge 25.1, 25.2 auf, an denen flexible Verbindungsleitungen 26.1, 26.2 angeschlossen sind, die zu dem Betätigungsorgan 12.1 des Mitnehmerelements 10 bzw. zu dem Betätigungsorgan 12.2 des Haltelements 14 führen. In Fig. 10 sind die Verbindungsleitungen 26.1, 26.2 nur andeutungsweise dargestellt. Wenn eine weitere Aktor-Einheit 18.1, 18.2 an einem Objekt-Trägerelement 6.1, 6.2 vorhanden ist, können noch weitere Medien-Ausgänge vorgesehen sein.

Die drehbaren Bauteile 24.1, 24.2, 24.3, 24.4 sind mit dem zugehörigen Objekt-Trägerelement 6.1, 6.2 starr verbunden. Hierzu ist jedem drehbaren Bauteil ein Kopplungselement 27.1, 27.2 zugeordnet. In Fig. 10 sind nur die Kopplungselemente der Objekt-Trägerelemente 6.1, 6.2 dargestellt. Das Kopplungselement kann eine Stange oder ein Gestänge sein. Wenn das Objekt-Trägerelement 6.1, 6.2 von dem Objektträger 3 mitgenommen wird, dreht sich das drehbare Bauteil 24.1, 24.2, 24.3, 24.4 mit dem Objekt-Trägerelement gegenüber dem feststehenden Bauteil 19 der Drehdurchführung um die zentrale Mittelachse 23 der Transporteinrichtung.

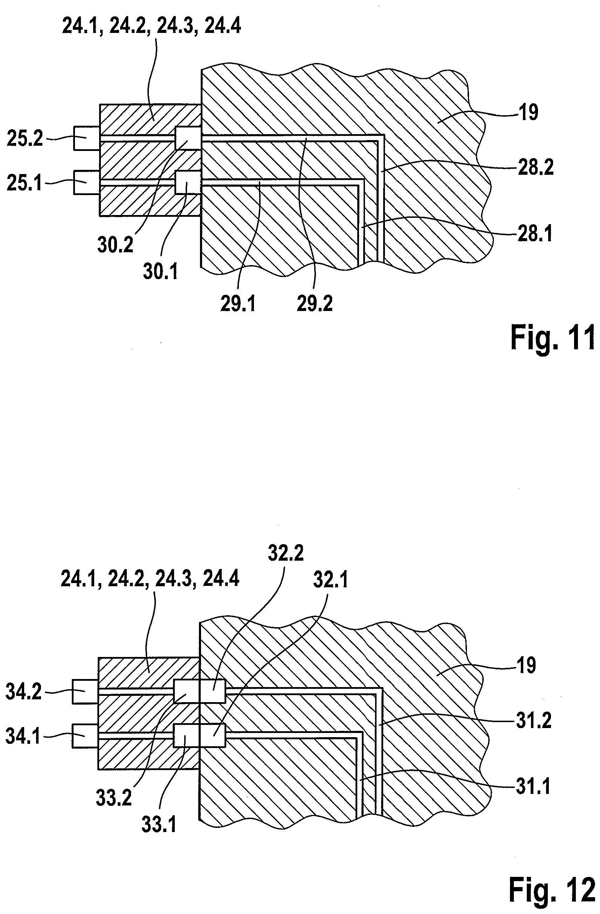

Die Figur 11 zeigt einen Teil der Drehdurchführung in vergrößerter Darstellung. Das feststehende Bauteil 19 ist ein zylindrischer Körper und die drehbaren Bauteile 24.1, 24.2, 24.3, 24.4 sind ringförmige Körper, die das feststehende Bauteil 19 umschließen. In dem feststehenden Bauteil 19 sind axiale Kanäle 29.1, 29.2 ausgebildet, an die sich radiale Bohrungen 29.1, 29.2 anschließen. Die radialen Bohrungen 29.1, 29.2 sind gegenüber Ringspalten 30.1, 30.2 abgedichtet, die in dem drehbaren Bauteil ausgebildet sind. Die Abdichtung erfolgt durch nicht dargestellte Rotations- oder Gleitdichtungen. Bei dem vorliegenden Ausführungsbeispiel weist das drehbare Bauteil 24.1, 24.2, 24.3, 24.4 zwei Medien-Ausgänge 25.1, 25.2 auf, zu denen die beiden axialen Kanäle 30.1, 30.2 führen. Die axialen Kanäle können auch zu Medienausgängen eines oder mehrerer anderer drehbarer Bauteile führen.

Fig. 12 zeigt einen Teil der Drehdurchführung in vergrößerter Darstellung für die Versorgung eines elektrischen oder elektromagnetischen Betätigungsorgans mit Strom. In dem feststehenden Bauteil 19 sind elektrische Leitungen 31.1, 31.2 vorgesehen, die zu Gleitkontakten 32.1, 32.2 führen, die ringförmigen Kontakten 33.1, 33.2 gleiten, die in einem oder mehreren drehbaren Bauteil 24.1, 24.2, 24.3, 24.4 vorgesehen sind. Bei dem vorliegenden Ausführungsbeispiel sind an dem drehbaren Bauteil 24.1, 24.2, 24.3, 24.4 zwei elektrische Anschlüsse 34.1, 34.2 vorgesehen, an denen nicht dargestellte elektrische Leitungen angeschlossen werden können.

Die Verwendung der erfindungsgemäßen Drehdurchführung ist nicht auf das Ausführungsbeispiel der Transporteinrichtung gemäß der Figuren 10 bis 12 beschränkt. Auch die unter Bezugnahme auf die Figuren 1 bis 9 beschriebene Ausführungsform kann über die Drehdurchführung verfügen. Bei der Ausführungsform gemäß der Figuren 10 bis 12 kommen die Vorteile der Drehdurchführung besonders zum Tragen, da die Betätigung der Mitnehmerelemente und der Halteelemente eine ortsfeste Maschinentechnik nicht erfordert, was die Drehdurchführung erst möglich macht. Die Betätigungseinheit für die Mitnehmerelemente und der Halteelemente kann an dem Objekt-Trägerelement vorgesehen sein. Beide Betätigungsorgane (Aktor-Einheiten) 12.1, 12.2 für das Mitnehmerelement 10 bzw. Halteelement 14 können getrennt voneinander mit einem Medium, beispielsweise Druckluft, versorgt und somit unabhängig voneinander betätigt werden.

In einer weiteren Ausführungsform kann eine Zwangskopplung der beiden Betätigungsorgane 12.1, 12.2 derart vorgesehen sein, dass das Betätigungsorgan des Mitnehmerelements betätigt wird, wenn das Betätigungsorgan des Halteelements nicht betätigt wird oder umgekehrt, so dass das zugehörige Objekt-Trägerelement freigegeben oder arretiert wird. Wenn eine derartige Zwangskopplung der Betätigungsorgane vorgesehen ist, sind zwei separate Medienleitungen, beispielsweise Druckluftleitungen, zur Versorgung der Betätigungsorgane nicht erforderlich. Vielmehr ist eine einzige Druckluftversorgung ausreichend. Die Umschaltung kann allein dadurch erfolgen, dass an einem Aktor Druckluft anliegt oder nicht anliegt. Ein Fehlerfall, in dem das Objektträger-Element gleichzeitig freigegeben oder arretiert wird, kann somit nicht auftreten. Dadurch verringert sich die Kollisionsgefahr.

In einer bevorzugten Ausführungsform können beide Betätigungsorgane, nämlich das Betätigungsorgan des Mitnehmerelements und das Betätigungsorgan des Halteelements, mittels eines einzigen Aktors realisiert sein. Zur Steuerung des Objektträger-Elements kann auf diese Weise eine Zwangskopplung der beiden Betätigungsorgane derart vorgesehen sein, dass das Betätigungsorgan des Mitnehmerelements betätigt wird, wenn das Betätigungsorgan des Halteelements nicht betätigt wird oder umgekehrt, so dass das zugehörige Objektträger-Element entweder freigegeben oder arretiert wird. Wenn eine derartige Zwangskopplung der Betätigungsorgane vorgesehen ist, sind zwei separate Medienleitungen, beispielsweise Druckluftleitungen, zur Versorgung der Betätigungsorgane nicht erforderlich, sondern nur noch eine Medienleitung. Bei dem Beispiel der Druckluftleitung kann die Umschaltung mittels eines doppelt wirkenden Druckluftzylinders erfolgen, wobei mittels eines Umschaltventils entweder nur der eine Eingang des Druckluftzylinders oder nur der andere Eingang des Druckluftzylinders mit einer Druckluftquelle verbunden wird und der Druckluftzylinder somit nur das Betätigungsorgan des Mitnehmerelements oder nur das Betätigungsorgan des Halteelements betätigt.

**Patentansprüche**

1. Drehdurchführung für eine Transporteinrichtung mit einem drehbaren Objektträger (3) der umfangsmäßig verteilt angeordnete Objekt-Trägerelemente (6.1, 6.2, 6.3, 6.4) aufweist, von denen mindestens ein Objektträger-Element auf dem Objektträger auf einer Kreisbahn relativ zum Objektträger verschiebbar angeordnet ist oder an dem Objektträger arretierbar ist,
wobei die Drehdurchführung ein feststehendes Bauteil (19) mit einem oder mehreren Medien-Eingängen (20.1, 20.2, 20.3) zum Zuführen eines oder mehrerer Medien zur Versorgung einer oder mehrerer Aktor-Einheiten (12.1, 12.2; 18.1, 18.2) eines Objekt-Trägerelements (6.1, 6.2) aufweist,
**dadurch gekennzeichnet, dass**
die Drehdurchführung mehrere gegenüber dem feststehenden Bauteil (19) unabhängig voneinander um eine gemeinsame Mittelachse (23) drehbare Bauteile (24.1, 24.2, 24.3, 24.4) aufweist, die jeweils einen oder mehrere Medien-Ausgänge (25.1, 25.2) aufweisen, wobei
das feststehende Bauteil (19) und die drehbaren Bauteile (24.1, 24.2, 24.3, 24.4) derart ausgebildet sind, dass eine Medienverbindung zwischen einem Medien-Eingang des feststehenden Bauteils und einem Medien-Ausgang des drehbaren Bauteils oder mehreren Medien-Eingängen (20.1, 20.2, 20.3) des feststehenden Bauteils (19) und mehreren Medien-Ausgängen (25.1, 25.2) der drehbaren Bauteile (24.1, 24.2, 24.3, 24.4) hergestellt wird.

2. Drehdurchführung nach Anspruch 1, **dadurch gekennzeichnet, dass** jedes drehbare Bauteil (24.1, 24.2, 24.3, 24.4) ein Kopplungselement (27.1, 27.2) aufweist, das derart ausgebildet ist, dass das drehbare Bauteil an ein Objekt-Trägerelement (6.1, 6.2) koppelbar ist.

3. Drehdurchführung nach Anspruch 2, **dadurch gekennzeichnet, dass** das Kopplungselement (27.1, 27.2) eine Stange oder ein Gestänge ist.

4. Drehdurchführung nach einem der Ansprüche 1 bis 3, **dadurch gekennzeichnet, dass** das feststehende Bauteil (19) als ein zylindrischer Körper ausgebildet ist und die drehbaren Bauteile (24.1, 24.2, 24.3, 24.4) als das feststehende Bauteil umschließende Körper ausgebildet sind, wobei die drehbaren Bauteile (24.1, 24.2, 24.3, 24.4) um die Mittelachse (23) des feststehenden Bauteils (19) drehbar übereinander angeordnet sind.

5. Drehdurchführung nach Anspruch 4, **dadurch gekennzeichnet, dass** in dem feststehenden Bauteil (19) mindestens ein axialer Kanal (28.1, 28.2) ausgebildet ist, der mit einer dem drehbaren Bauteil (24.1, 24.2, 24.3, 24.4) zugeordneten radialen Bohrung (29.1, 29.2) in Verbindung steht, und jedes drehbare Bauteil mindestens einen Ringspalt (30.1, 30.2) aufweist, der zur Übergabe des Mediums von der radialen Bohrung (29.1, 29.2) zu dem Medienausgang des drehbaren Bauteils konfiguriert ist, wobei der mindestens eine Ringspalt (30.1, 30.2) gegenüber dem feststehenden Bauteil (19) mittels mindestens einer Rotationsdichtung und/oder Gleitdichtung abgedichtet ist.

6. Drehdurchführung nach Anspruch 5, **dadurch gekennzeichnet, dass** die drehbaren Bauteile (24.1, 24.2, 24.3, 24.4) als ringförmige Körper ausgebildet sind, die jeweils einen oder mehrere radiale Medien-Ausgänge (25.1, 25.2) aufweisen.

**7.** Transporteinrichtung zum Transport von Objekten von Arbeitsstation zu Arbeitsstation einer Produktionsanlage mit einem drehbaren Objektträger (3), der umfangsmäßig verteilt angeordnete Objekt-Trägerelemente (6) aufweist, von denen mindestens ein Objektträger-Element auf dem Objektträger auf einer Kreisbahn relativ zum Objektträger verschiebbar angeordnet ist oder an dem Objektträger arretierbar ist,
**dadurch gekennzeichnet, dass** die Transporteinrichtung eine Drehdurchführung (A) nach einem der Ansprüche 1 bis 6 aufweist.

**8.** Transporteinrichtung nach Anspruch 7, **dadurch gekennzeichnet, dass** die Transporteinrichtung eine zentrale Medien-Versorgungsanlage (21) aufweist, die über eine oder mehrere Versorgungsleitungen (22.2, 22.2, 22.3) für die Zufuhr von einem oder mehreren Medien mit dem einen oder den mehreren Medien-Eingängen (20.2, 20.2, 20.3) der Drehdurchführung verbunden ist.

**9.** Transporteinrichtung nach Anspruch 7 oder 8, **dadurch gekennzeichnet, dass** die Drehdurchführung derart angeordnet ist, dass das feststehende Bauteil (19) zentral auf dem Objektträger (3) angeordnet ist oder den Objektträger im Zentrum durchdringt, wobei die drehbaren Bauteile (24.1, 24.2, 24.3, 24.4) oberhalb der Objekt-Trägerelemente (6) angeordnet sind.

**10.** Transporteinrichtung nach einem der Ansprüche 7 bis 9, **dadurch gekennzeichnet, dass** die Objekt-Trägerelemente (6) jeweils eine oder mehrere Aktor-Einheiten (12.1, 12.2; 18.1, 18.2) aufweisen, wobei die eine oder die mehreren Aktor-Einheiten (12.1, 12.2; 18.1, 18.2) für die Zuführung eines oder mehrerer Medien mit dem einen oder den mehreren Medien-Ausgängen (25.1, 25.2) eines drehbaren Bauteils (24.1, 24.2, 24.3, 24.4) über Verbindungsleitungen (26.1, 26.2) verbunden sind.

**11.** Transporteinrichtung nach Anspruch 10, **dadurch gekennzeichnet, dass** die Verbindungsleitungen (26.1, 26.2) flexible Schlauchleitungen sind.

**12.** Transporteinrichtung nach einem der Ansprüche 7 bis 11, **dadurch gekennzeichnet, dass** den Objekt-Trägerelementen (6) bewegbare Mitnehmerelemente (10) zugeordnet sind, die zwischen einem aktiven Zustand, in dem eine Relativbewegung von Objekt-Trägerelement und Objektträger verhindert wird, und einem nicht aktiven Zustand, in dem eine Relativbewegung von Objekt-Trägerelement und Objektträger zugelassen wird, bewegbar sind, und dass den Objekt-Trägerelementen (6) ortsfeste Halteelemente (14) zugeordnet sind, die zwischen einem aktiven Zustand, in dem das Objekt-Trägerelement festgehalten wird, und einem nicht aktiven Zustand, in dem das Objekt-Trägerelement freigegeben wird, bewegbar sind,
dass eine Betätigungseinheit (11) zur Betätigung der Mitnehmerelemente (10) und Halteelemente (14) und eine Steuereinheit (15) für die Betätigungseinheit vorgesehen sind, wobei die Steuereinheit derart ausgebildet ist, dass in einzelnen Arbeitstakten der aufeinanderfolgenden Arbeitstakte, das Mitnehmerelement (10) einen aktiven Zustand und das Halteelement (14) einen inaktiven Zustand einnimmt, so dass das mindestens eine Objekt-Trägerelement (6) von dem Objektträger (3) mitgenommen und von Arbeitsstation zu Arbeitsstation (A, B, C, D) bewegt wird, und in einzelnen Arbeitstakten der aufeinanderfolgenden Arbeitstakte, das Mitnehmerelement (10) einen inaktiven Zustand und das Halteelement (14) einen aktiven Zustand einnimmt, so dass das mindestens eine Objekt-Trägerelement an einer Arbeitsstation (A, B, C, D) verbleibt.

**13.** Transporteinrichtung nach einem der Ansprüche 7 bis 12, **dadurch gekennzeichnet, dass** der Objektträger (3) eine Führungsbahn (9) aufweist, in der die Objekt-Trägerelemente (6) frei bewegbar geführt sind.

**14.** Transporteinrichtung nach einem der Ansprüche 7 bis 13, **dadurch gekennzeichnet, dass** die Objekt-Trägerelemente (6) mehrere Aufnahmeelemente (7) aufweisen, die jeweils zur Aufnahme eines Objektes ausgebildet sind.

**15.** Transporteinrichtung nach einem der Ansprüche 7 bis 14, **dadurch gekennzeichnet, dass** die Mitnehmerelemente (10) derart ausgebildet sind, dass eine formschlüssige und/oder kraftschlüssige Verbindung zwischen einem Teil des Objekt-Trägerelements (6) und einem Teil des Objektträgers (3) herstellbar ist.

**16.** Transporteinrichtung nach einem der Ansprüche 7 bis 15, **dadurch gekennzeichnet, dass** die Halteelemente (10) derart ausgebildet sind, dass eine formschlüssige und/oder kraftschlüssige Verbindung zwischen einem Teil des Objekt-Trägerelements (6) und einem ortsfesten Teil (2) herstellbar ist.

**17.** Produktionsanlage zur Herstellung von Produkten mit einer Transporteinrichtung zum Transport von Objekten nach einem der Ansprüche 7 bis 16, **dadurch gekennzeichnet, dass** eine Mehrzahl von Arbeitsstationen (A, B, C, D) vorgesehen ist, wobei jede Arbeitsstation zur Durchführung eines mindestens einen Arbeitsschritt umfassenden Arbeitsprozesses an mindestens einem Produkt, das auf einem Objekt-Trägerelement (6) angeordnet ist, ausgebildet ist.

**Claims**

1. Rotary feedthrough for a transport device comprising a rotary object carrier (3) which comprises object carrier elements (6.1, 6.2, 6.3, 6.4) arranged so as to be distributed around the circumference, of which at least one object carrier element is arranged on the object carrier so as to be displaceable relative to the object carrier on a circular path or can be locked in place on the object carrier, the rotary feedthrough comprising a stationary component (19) having one or more media inputs (20.1, 20.2, 20.3) for providing one or more media to supply one or more actuator units (12.1, 12.2; 18.1, 18.2) of an object carrier element (6.1, 6.2), **characterised in that** the rotary feedthrough comprises a plurality of components (24.1, 24.2, 24.3, 24.4) which are rotatable independently of one another about a common central axis (23) relative to the stationary component (19) and each have one or more media outputs (25.1, 25.2), the stationary component (19) and the rotary components (24.1, 24.2, 24.3, 24.4) being designed such that a media connection is formed between a media input of the stationary component and a media output of the rotary component, or a plurality of media inputs (20.1, 20.2, 20.3) of the stationary component (19) and a plurality of media outputs (25.1, 25.2) of the rotary components (24.1, 24.2, 24.3, 24.4).

2. Rotary feedthrough according to claim 1, **characterised in that** each rotary component (24.1, 24.2, 24.3, 24.4) comprises a coupling element (27.1, 27.2) which is designed such that the rotary component can be coupled to an object carrier element (6.1, 6.2).

3. Rotary feedthrough according to claim 2, **characterised in that** the coupling element (27.1, 27.2) is a rod or linkage.

4. Rotary feedthrough according to any of claims 1 to 3, **characterised in that** the stationary component (19) is designed as a cylindrical body and the rotary components (24.1, 24.2, 24.3, 24.4) are designed as bodies that surround the stationary component, the rotary components (24.1, 24.2, 24.3, 24.4) being arranged one above the other so as to be rotatable about the central axis (23) of the stationary component (19).

5. Rotary feedthrough according to claim 4, **characterised in that** at least one axial channel (28.1, 28.2) which is in connection with a radial bore (29.1, 29.2) assigned to one of the rotary components (24.1, 24.2, 24.3, 24.4) is formed in the stationary component (19), and each rotary component has at least one annular gap (30.1, 30.2) which is configured for transferring the medium from the radial bore (29.1, 29.2) to the media output of the rotary component, the at least one annular gap (30.1, 30.2) being sealed off from the stationary component (19) by means of at least one rotary seal and/or sliding seal.

6. Rotary feedthrough according to claim 5, **characterised in that** the rotary components (24.1, 24.2, 24.3, 24.4) are designed as annular bodies which each have one or more radial media outputs (25.1, 25.2).

7. Transport device for transporting objects from work station to work station of a production facility comprising a rotary object carrier (3) which comprises object carrier elements (6) arranged so as to be distributed around the circumference, of which at least one object carrier element is arranged on the object carrier so as to be displaceable relative to the object carrier on a circular path or can be locked in place on the object carrier, **characterised in that** the transport device comprises a rotary feedthrough (A) according to any of claims 1 to 6.

8. Transport device according to claim 7, **characterised in that** the transport device comprises a central media supply facility (21) which is connected to one or more media inputs (20.2, 20.2, 20.3) of the rotary feedthrough by one or more supply lines (22.2, 22.2, 22.3) for supplying one or more media.

9. Transport device according to either claim 7 or claim 8, **characterised in that** the rotary feedthrough is arranged such that the stationary component (19) is arranged centrally on the object carrier (3) or penetrates the object carrier in the centre, the rotary components (24.1, 24.2, 24.3, 24.4) being arranged above the object carrier elements (6).

10. Transport device according to any of claims 7 to 9, **characterised in that** the object carrier elements (6) each comprise one or more actuator units (12.1, 12.2; 18.1, 18.2), the one or more actuator units (12.1, 12.2; 18.1, 18.2) being connected to the one or more media outputs (25.1, 25.2) of a rotary component (24.1, 24.2, 24.3, 24.4) by means of connection lines (26.1, 26.2) in order to provide one or more media.

11. Transport device according to claim 10, **characterised in that** the connection lines (26.1, 26.2) are flexible hose lines.

12. Transport device according to any of claims 7 to 11, **characterised in that** the object carrier elements (6) are assigned movable dog elements (10) which can move between an active state, in which relative movement between the object carrier element and object carrier is prevented, and an inactive state, in which relative movement between the object carrier element and object carrier is permitted, and
the object carrier elements (6) are assigned stationary retaining elements (14) that can move between an active state, in which the object carrier element is held in place, and an inactive state, in which the object carrier element is released,
an actuation unit (11) for actuating the dog elements (10) and retaining elements (14) and a control unit (15) for the actuation unit are provided, the control unit being designed such that, in some cycles of the successive cycles, the dog element (10) assumes an active state and the retaining element (14) assumes an inactive state such that the at least one object carrier element (6) is carried along by the object carrier (3) and moved from work station to work station (A, B, C, D), and, in some cycles of the successive cycles, the dog element (10) assumes an inactive state and the retaining element (14) assumes an active state such that the at least one object carrier element remains at a work station (A, B, C, D).

13. Transport device according to any of claims 7 to 12, **characterised in that** the object carrier (3) comprises a guide path (9) in which the object carrier elements (6) are guided in a freely movable manner.

14. Transport device according to any of claims 7 to 13, **characterised in that** the object carrier elements (6) comprise a plurality of receiving elements (7) which are each designed to receive an object.

15. Transport device according to any of claims 7 to 14, **characterised in that** the dog elements (10) are designed such that an interlocking and/or frictional connection can be established between a part of the object carrier element (6) and a part of the object carrier (3).

16. Transport device according to any of claims 7 to 15, **characterised in that** the retaining elements (10) are designed such that an interlocking and/or frictional connection can be established between a part of the object carrier element (6) and a stationary part (2).

17. Production facility for producing products, comprising a transport device for transporting objects according to any of claims 7 to 16, **characterised in that** a plurality of work stations (A, B, C, D) is provided, each work station being designed to carry out at least one work process, which includes at least one work step, on at least one product arranged on an object carrier element (6).

## Revendications

1. Passage tournant pour un dispositif de transport avec un support d'objet (3) rotatif,
qui présente des éléments de support d'objet (6.1, 6.2, 6.3, 6.4) disposés de manière répartie en périphérie, parmi lesquels au moins un élément de support d'objet est disposé de manière à pouvoir coulisser par rapport au support d'objet selon une trajectoire sur le support d'objet ou peut être arrêté au niveau du support d'objet,
dans lequel le passage tournant présente un composant immobile (19) avec une ou plusieurs entrées de milieux (20.1, 20.2, 20.3) pour amener un ou plusieurs milieux aux fins de l'alimentation d'une ou de plusieurs unités d'actionneur (12.1, 12.2 ; 18.1, 18.2) d'un élément de support d'objet (6.1, 6.2),
**caractérisé en ce que**
le passage tournant présente plusieurs composants (24.1, 24.2, 24.3, 24.4) pouvant tourner indépendamment les uns des autres autour d'un axe central (23) commun par rapport au composant immobile (19), qui présentent respectivement une ou plusieurs sorties de milieux (25.1, 25.2), dans lequel
le composant immobile (19) et les composants rotatifs (24.1, 24.2, 24.3, 24.4) sont réalisés de telle manière qu'une communication fluidique est établie entre une entrée de milieux du composant immobile et une sortie de milieux du composant rotatif ou plusieurs entrées de milieux (20.1, 20.2, 20.3) du composant immobile (19) et plusieurs sorties de milieux (25.1, 25.2) des composants rotatifs (24.1, 24.2, 24.3, 24.4).

2. Passage tournant selon la revendication 1, **caractérisé en ce que** chaque composant rotatif (24.1, 24.2, 24.3, 24.4) présente un élément de couplage (27.1, 27.2), qui est réalisé de telle manière que le composant rotatif peut être couplé à un élément de support d'objet (6.1, 6.2).

3. Passage tournant selon la revendication 2, **caractérisé en ce que** l'élément de couplage (27.1, 27.2) est une tige ou une tringle.

4. Passage tournant selon l'une quelconque des revendications 1 à 3, **caractérisé en ce que** le composant immobile (19) est réalisé en tant qu'un corps cylindrique et les composants rotatifs (24.1, 24.2, 24.3, 24.4) sont réalisés en tant que corps renfermant le composant immobile, dans lequel les composants rotatifs (24.1, 24.2, 24.3, 24.4) sont disposés les uns par-dessus les autres de manière à pouvoir tourner autour de l'axe central (23) du composant immobile (19).

5. Passage tournant selon la revendication 4, **caractérisé en ce qu'**est réalisé dans le composant immobile (19) au moins un canal axial (28.1, 28.2), qui est relié à un alésage (29.1, 29.2) radial associé au composant rotatif (24.1, 24.2, 24.3, 24.4), et chaque composant rotatif présente au moins une fente annulaire (30.1, 30.2), qui est configurée pour transmettre le milieu depuis l'alésage (29.1, 29.2) radial vers la sortie de milieux du composant rotatif, dans lequel l'au moins une fente annulaire (30.1, 30.2) est étanchéifiée par rapport au composant immobile (19) au moyen d'au moins un joint d'étanchéité de rotation et/ou d'un joint d'étanchéité glissant.

6. Passage tournant selon la revendication 5, **caractérisé en ce que** les composants rotatifs (24.1, 24.2, 24.3, 24.4) sont réalisés en tant que corps annulaires, qui présentent respectivement une ou plusieurs sorties de milieux (25.1, 25.2) radiales.

7. Dispositif de transport pour le transport d'objets d'un poste de travail à un poste de travail d'une installation de production avec un support d'objet (3) pouvant tourner, qui présente des éléments de support d'objet (6) disposés de manière répartie en périphérie, parmi lesquels au moins un élément de support d'objet est disposé de manière à pouvoir coulisser par rapport au support d'objet selon une trajectoire sur le support d'objet ou peut être arrêté au niveau du support d'objet, **caractérisé en ce que** le dispositif de transport présente un passage tournant (A) selon l'une quelconque des revendications 1 à 6.

8. Dispositif de transport selon la revendication 7, **caractérisé en ce que** le dispositif de transport présente une installation d'alimentation en milieux (21) centrale, qui est reliée aux une ou plusieurs entrées de milieux (20.2, 20.2, 20.3) du passage tournant par l'intermédiaire d'un ou de plusieurs conduits d'alimentation (22.2, 22.2, 22.3) pour l'amenée d'un ou de plusieurs milieux.

9. Dispositif de transport selon la revendication 7 ou 8, **caractérisé en ce que** le passage tournant est disposé de telle manière que le composant immobile (19) est disposé de manière centrale sur le support d'objet (3) ou traverse le support d'objet au centre, dans lequel les composants rotatifs (24.1, 24.2, 24.3, 24.4) sont disposés au-dessus des éléments de support d'objet (6).

10. Dispositif de transport selon l'une quelconque des revendications 7 à 9, **caractérisé en ce que** les éléments de support d'objet (6) présentent respectivement une ou plusieurs unités d'actionneur (12.1, 12.2 ; 18.1, 18.2), dans lequel les une ou plusieurs unités d'actionneur (12.1, 12.2 ; 18.1, 18.2) sont reliées pour l'amenée d'un ou de plusieurs milieux aux une ou plusieurs sorties de milieux (25.1, 25.2) d'un composant rotatif (24.1, 24.2, 24.3, 24.4) par l'intermédiaire de conduits de liaison (26.1, 26.2).

11. Dispositif de transport selon la revendication 10, **caractérisé en ce que** les conduits de liaison (26.1, 26.2) sont des conduits tubulaires flexibles.

12. Dispositif de transport selon l'une quelconque des revendications 7 à 11, **caractérisé en ce que** sont associés aux éléments de support d'objet (6) des éléments entraîneurs (10) pouvant être déplacés, qui peuvent être déplacés entre un état actif, dans lequel un déplacement relatif de l'élément de support d'objet et le support d'objet est empêché, et un état non actif, dans lequel un déplacement relatif de l'élément de support d'objet et du support d'objet est autorisé, et
**que** sont associés aux éléments de support d'objet (6) des éléments de maintien (14) stationnaires, qui peuvent être déplacés entre un état actif, dans lequel l'élément de support d'objet est retenu, et un état non actif, dans lequel l'élément de support d'objet est libéré,
**que** sont prévues une unité d'actionnement (11) pour actionner les éléments entraîneurs (10) et les éléments de maintien (14) et une unité de commande (15) pour l'unité d'actionnement, dans lequel l'unité de commande est réalisée de telle manière que dans des cycles de travail individuels des cycles de travail se suivant les unes les autres, l'élément entraîneur (10) adopte un état actif et l'élément de maintien (14) adopte un état inactif de sorte que l'au moins un élément de support d'objet (6) est entraîné par le support d'objet (3) et est déplacé de poste de travail en poste de travail (A, B, C, D) et dans des cycles de travail individuels des cycles de travail se suivant les unes les autres, l'élément entraîneur (10) adopte un état inactif et l'élément de maintien (14) adopte un état actif de telle sorte que l'au moins un élément de support d'objet reste au niveau d'un poste de travail (A, B, C, D).

13. Dispositif de transport selon l'une quelconque des revendications 7 à 12, **caractérisé en ce que** le support d'objet (3) présente une trajectoire de guidage (9), sur laquelle les éléments de support d'objet (6) sont guidés de manière à pouvoir être déplacés librement.

14. Dispositif de transport selon l'une quelconque des revendications 7 à 13, **caractérisé en ce que** les éléments de support d'objet (6) présentent plusieurs éléments de logement (7), qui sont réalisés respectivement pour loger un objet.

**15.** Dispositif de transport selon l'une quelconque des revendications 7 à 14, **caractérisé en ce que** les éléments entraîneurs (10) sont réalisés de telle manière qu'une liaison par complémentarité de forme et/ou à force peut être établie entre une partie de l'élément de support d'objet (6) et une partie du support d'objet (3).

**16.** Dispositif de transport selon l'une quelconque des revendications 7 à 15, **caractérisé en ce que** les éléments de maintien (10) sont réalisés de telle manière qu'une liaison par complémentarité de forme et/ou à force peut être établie entre une partie de l'élément de support d'objet (6) et une partie stationnaire (2).

**17.** Installation de production pour fabriquer des produits avec un dispositif de transport pour le transport d'objets selon l'une quelconque des revendications 7 à 16, **caractérisée en ce qu'**est prévue une multitude de postes de travail (A, B, C, D), dans laquelle chaque poste de travail est réalisé pour mettre en oeuvre un processus de travail comprenant au moins une étape de travail au niveau d'au moins un produit, qui est disposé sur un élément de support d'objet (6).

**Fig. 1**

**Fig. 2**

Fig. 3

Fig. 4

A

6.4

6.3

6.1

7.2

6.2

D

7.3

B

7.4

C

**Fig. 5**

A

6.4

6.1

6.3

6.2

7.3

D

7.4

B

7.5

C

**Fig. 6**

A

6.4

6.1

6.3

6.2

7.4

7.5

7.1

D

B

C

**Fig. 7**

A

6.4

6.1

6.3

6.2

7.5

7.1

7.2

D

B

C

**Fig. 8**

Fig. 9

Fig. 10

EP 3 490 751 B1

24.1, 24.2, 24.3, 24.4

25.2

25.1

30.2

30.1

19

28.2

28.1

29.1    29.2

Fig. 11

24.1, 24.2, 24.3, 24.4

32.2    32.1

34.2

34.1

33.2

33.1

19

31.2

31.1

Fig. 12

24

**IN DER BESCHREIBUNG AUFGEFÜHRTE DOKUMENTE**

**In der Beschreibung aufgeführte Patentdokumente**

- EP 0570734 A1
- DE 10343378 A1

- DE 102016004335